# EUROPEAN PATENT APPLICATION

(11) **EP 4 585 314 A1**
(43) Date of publication of application: **16.07.2025**
(21) Application number: 22958212.7
(22) Date of filing: 07.09.2022
(51) Int. Cl.: B05C 1/08, B05C 1/12, H01M 4/04

(54) **ELECTRONIC DEVICE AND ELECTRONIC DEVICE CONTROL METHOD**

(30) Priority: 06.09.2022 KR 20220113044
(71) Applicant: LG Electronics Inc., Yeongdeungpo-gu Seoul 07336 (KR)
(72) Inventor: SHIN, Eunjung, Seoul 06772 (KR); CHUNG, Jinwon, Seoul 06772 (KR); KIM, Joongnyon, Seoul 06772 (KR); LEE, Yujin, Seoul 06772 (KR); YOO, Chijong, Seoul 06772 (KR); AN, Gukhwan, Seoul 06772 (KR)
(74) Representative: Frenkel, Matthias Alexander
(86) International application number: PCT/KR2022/013414
(87) International publication number: WO 2024/053757

(57) **Abstract**

According to embodiments, provided is an electronic device comprising: a first roller; a second roller arranged to face the first roller; and a drive unit that rotatably drives the first roller at a first speed and rotatably drives the second roller at a second speed to form, into a film, a mixture being input between the first roller and the second roller.

## Description

### [Technical Field]

Embodiments of the present disclosure relate to an electronic device and a method for controlling the same, and more particularly to an electronic device for manufacturing electrode sheets and a method for controlling the same.

### [Background Art]

Recently, as interest in the environment increases, the need for secondary batteries has increased in order to realize energy saving and environmental protection. In addition, as technological development continues and the demand for electric vehicles increases, the battery industry is growing rapidly. Accordingly, there are various demands for improving battery performance, securing safety, improving space utilization, and improving price competitiveness of secondary batteries. In order to satisfy these demands, improvement of the manufacturing process of secondary batteries is required.

A secondary battery refers to a semi-permanently usable battery that can be used semi-permanently by charging electricity generated in a process of causing an oxidation-reduction (redox) reaction of materials between positive and negative electrodes by an external power supply. Unlike a primary battery that can only be used once, secondary batteries can advantageously be charged several times and reused.

A secondary battery includes a positive electrode plate, a negative electrode plate, a separator that separates the positive and negative electrode plates from each other, an electrolyte, and a case that contains and seals the same. The structure including the positive electrode plate, the negative electrode plate, and the separator is referred to as an electrode assembly. An electrode including the positive and negative electrode plates is formed by providing an active material layer on a substrate such as a current collector.

Meanwhile, such positive electrode materials are generally manufactured by the following wet manufacturing method. A positive electrode active material, a conductive material, and a binder are input and mixed. A positive electrode slurry is applied onto a current collector. Then, the positive electrode slurry is dried to manufacture the positive electrode.

However, the above-described wet manufacturing method has a problem in that it is difficult to manufacture a positive electrode active material layer having a uniform thickness. In addition, the wet manufacturing method has a problem in that a large amount of carbon dioxide is generated due to solvent drying during the electrode wet manufacturing process, which harms the environment. For example, the NMP solvent used to manufacture the electrode is a hazardous substance, which causes environmental problems when dried, and high costs are incurred as the process is time consuming.

Meanwhile, in order to solve the above problems, a dry manufacturing method that does not require a solvent drying process has been proposed. The dry manufacturing method is a method in which a positive electrode active material, a conductive material, and a binder are mixed without using a solvent. However, in this case, there is a problem in that the binder fiberizes and adhesion of the binder is deteriorated.

### [Disclosure]

### [Technical Problem]

An object of the present disclosure is to provide an electronic device and a method for controlling the same.

Another object of the present disclosure is to provide an electronic device manufactured such that fiberization of electrode sheets can be maximized, and a method for controlling the same.

Another object of the present disclosure is to provide an electronic device in which maximized shear force and/or maximized adhesive force can be provided to electrode sheets, and a method for controlling the same.

Another object of the present disclosure is to provide an electronic device configured to manufacture an electrode sheet having a target thickness, and a method for controlling the same.

It will be appreciated by persons skilled in the art that the objects that could be achieved with the present disclosure are not limited to what has been particularly described hereinabove and the above and other objects that the present disclosure could achieve will be more clearly understood from the following detailed description.

### [Technical Solutions]

In accordance with an aspect of the present disclosure, an electronic device may include: a first roller; a second roller arranged to face the first roller; and a drive unit that rotates the first roller at a first speed and rotates the second roller at a second speed different from the first speed so that a mixture fed between the first roller and the second roller is formed into a film.

The drive unit may drive the first roller and the second roller so that a ratio of the first speed to the second speed is 6:1 to 20:1.

The drive unit may drive the first roller and the second roller so that a ratio of the first speed to the second speed is 1:1 to 10:1.

The electronic device may further include: a mixture input unit configured to feed the mixture; and a current collector input unit configured to feed a current collector after the mixture has been input.

The electronic device may further include: a sensor configured to sense a degree to which the filmed mixture surrounds an outer circumferential surface of the first roller.

When the sensor senses that the filmed mixture surrounds the outer circumferential surface of the first roller by a preset range or greater, the current collector input unit may inject the current collector.

After the current collector is input, the drive unit may drive the first roller and the second roller so that the ratio of the first speed to the second speed is 1:1 to 5:1.

The first roller and the second roller may rotate in opposite directions.

The first roller and the second roller may be driven at a temperature of 25°C to 200°C.

The electronic device may further include: the first roller and the second roller are driven at a temperature of 150°C to 200°C.

In accordance with another aspect of the present disclosure, a method for controlling an electronic device may include: rotating a first roller at a first speed, and rotating a second roller arranged to face the first roller at a second speed different from the first speed; allowing a mixture to be injected between the first roller and the second roller; and forming a film of the injected mixture using the first roller and the second roller.

The method may further include: driving the first roller and the second roller so that a ratio of the first speed to the second speed becomes 6:1 to 20:1 when the mixture is injected.

The method may further include: driving, by a drive unit, the first roller and the second roller so that a ratio of the first speed to the second speed becomes 1: 1 to 10:1 when the mixture is injected.

The method may further include: injecting, by the drive unit, a current collector when the filmed mixture surrounds an outer circumferential surface of the first roller by a preset range or greater; and forming an electrode plate in which the current collector is attached onto the filmed mixture.

The injecting the current collector may include: driving, by the drive unit, the first roller and the second roller so that a ratio of the first speed to the second speed is 1:1 to 5:1.

The injecting the mixture may include: forming a surface-modified active material coated with at least one of a polymer and a conductive material; forming a mixture by mixing a conductive material, an active material, the surface-modified active material, and a binder; and injecting the mixture.

### [Advantageous Effects]

As is apparent from the above description, the electronic device and the method for controlling the same according to the embodiments of the present disclosure may reduce time and costs required to manufacture electrodes.

The electronic device and the method for controlling the same according to the embodiments of the present disclosure may minimize environmental pollution occurring in a process of manufacturing the electrodes.

The electronic device and the method for controlling the same according to the embodiments of the present disclosure may maximize the capacity of manufactured batteries.

The electronic device and the method for controlling the same according to the embodiments of the present disclosure may improve mechanical properties and/or electrical performance of manufactured electrodes.

The electronic device and the method for controlling the same according to the embodiments of the present disclosure can simplify the electrode manufacturing process.

Effects obtainable from the present embodiments are not limited by the above mentioned effects, and other unmentioned effects can be clearly understood from the above description by those having ordinary skill in the technical field to which the present disclosure pertains.

### [Description of Drawings]

The accompanying drawings, which are included to provide a further understanding of the disclosure and are incorporated in and constitute a part of this application, illustrate embodiments of the disclosure and together with the description serve to explain the principle of the disclosure.
FIG. 1 is a block diagram illustrating an electronic device according to the embodiments of the present disclosure.
FIG. 2 is a flowchart illustrating a method for controlling the electronic device according to the embodiments of the present disclosure.
FIG. 3 is a cross-sectional view illustrating the electronic device according to the embodiments of the present disclosure.
FIG. 4 is a schematic enlarged view illustrating a mixture introduced into the electronic device according to the embodiments of the present disclosure.
FIG. 5 is a flowchart illustrating a method for controlling the electronic device according to the embodiments of the present disclosure.
FIG. 6 is a cross-sectional view illustrating a process in which a mixture is filmed by the electronic device according to the embodiments of the present disclosure.
FIG. 7 is a cross-sectional view schematically illustrating a process in which a mixture is filmed by the electronic device according to the embodiments of the present disclosure.
FIG. 8 is a cross-sectional view schematically illustrating a process of forming electrode plates by the electronic device according to the embodiments of the present disclosure.
FIG. 9 is a cross-sectional view schematically illustrating electrode plates formed by the electronic device according to the embodiments of the present disclosure.

### [Best Mode]

Description will now be given in detail according to exemplary embodiments disclosed herein, with reference to the accompanying drawings. The same or equivalent components may be provided with the same reference numbers, and description thereof will not be repeated. As used herein, the suffixes "module" and "part" are added or used interchangeably to facilitate preparation of this specification and are not intended to suggest distinct meanings or functions.

In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical spirit disclosed in the present specification. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. It will be understood that when an element is referred to as being "connected with" another element, the element can be directly connected with the other element or intervening elements may also be present.

In contrast, it will be understood that when an element is referred to as being "directly connected with" another element, there are no intervening elements present. A singular representation may include a plural representation unless it represents a definitely different meaning from the context. The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

A battery to be described in this specification is a secondary battery that can be reused by being recharged with electricity rafter being discharged. In this case, the secondary battery may include a lead-acid battery, a nickel-cadmium battery, a nickel-metal hydrogen battery, and a lithium-ion battery. In addition, the electrode assembly described in the present specification is an electrode assembly including a positive electrode, a separator, and a negative electrode.

The electrode described herein may include a positive electrode or a negative electrode. The electrode allows the battery to be charged or discharged while an electrochemical reaction occurs due to the movement of electrons. In this case, the positive electrode and the negative electrode include an active material, an active material layer including a conductive material, and a current collector to which the active material layer is applied.

Also, in the present specification, the electrodes may be referred to by various terms for convenience of description. For example, the electrode may be used interchangeably with sheet, filmed mixture, freestanding electrode, electrode plate, and the like.

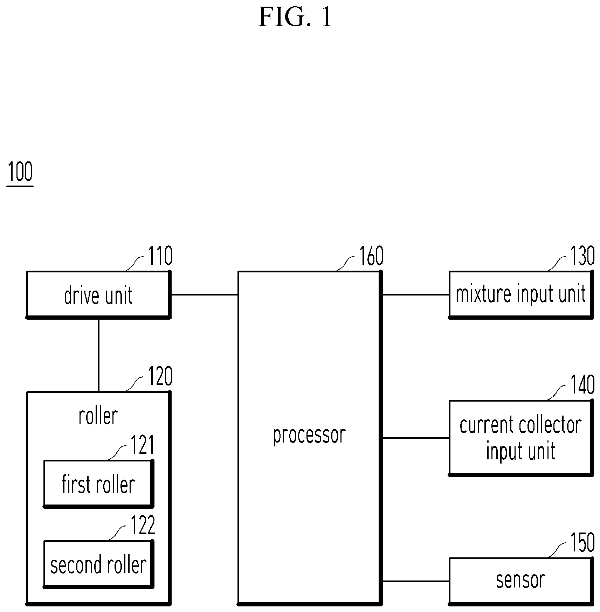

FIG. 1 is a block diagram illustrating an electronic device 100 according to the embodiments of the present disclosure.

The electronic device 100 according to embodiments is a device for manufacturing electrodes. The electronic device 100 may manufacture electrodes using raw materials introduced into the electronic device 100. The electronic device 100 may manufacture the electrodes using the raw materials without using a solvent. At this time, the raw materials include, for example, an active material, a conductive material, and/or a binder. In addition, the raw materials may include, for example, a mixture of at least one of the active material, the conductive material, and the binder. The electronic device 100 may manufacture electrodes by attaching the mixed raw materials to a current collector.

To this end, the electronic device 100 may include a drive unit 110, a roller 120, a mixture input unit 130, a current collector input unit 140, a sensor 150, and a processor 160. However, the components illustrated in FIG. 1 are merely examples. The electronic device 100 may include at least some of the components shown in FIG. 1, or may include other components in addition to the components shown in FIG. 1.

The drive unit 110 may drive the roller 120. For example, the drive unit 110 may increase or decrease a rotational speed of the roller 120. The drive unit 110 also causes the roller 120 to rotate clockwise or counterclockwise.

The roller 120 applies force to the input raw materials. For example, the roller 120 may provide shear force to the input raw materials. In addition, for example, the roller 120 can attach the raw materials to the collector.

The roller 120 may include one or more rollers. The roller 120 includes, for example, a first roller 121 and a second roller 122. For example, the first roller 121 and the second roller 122 are arranged facing each other. The first roller 121 and the second roller 122 are arranged a predetermined distance apart from each other. For example, the shortest distance between the outer circumferential surface of the first roller 121 and the outer circumferential surface of the second roller 122 may correspond to a thickness of the film formed by the raw materials.

By rotating at least one of the first roller 121 and the second roller 122, the first roller 121 and/or the second roller 122 may provide shear force to the raw materials injected between the first roller 121 and the second roller 122.

The mixture input unit 130 may feed the raw materials toward the roller 120. For example, the mixture input unit 130 may feed the raw materials between the first roller 121 and the second roller 122. The mixture input unit 130 may inject a predetermined amounts of raw materials toward the roller 120.

The current collector input unit 140 may feed the current collector toward the roller 120. For example, the current collector input unit 140 may feed the current collector between the first roller 121 and the second roller 122. The current collector input unit 140 may inject a predetermined amount of current collectors toward the roller 120.

The sensor 150 may sense the amount of mixture injected toward the roller 120. Alternatively, the sensor 150 may sense the amount of collector injected toward the roller 120.

At this time, the sensor 150 may be located at the outer circumferential surface of the roller 120, and may be formed in a passage where the filmed mixture 201 is not wound. Alternatively, the sensor 150 may be embedded into the inside of the roller 120. Alternatively, the sensor 150 may be formed in the mixture input unit 130 or the current collector input unit 140.

The sensor 150 may include at least one of a proximity sensor, an illumination sensor , a touch sensor, an acceleration sensor, a magnetic sensor, a gravity sensor (G-sensor), an infrared (IR) sensor, a fingerprint sensor, an ultrasonic sensor, an optical sensor (for example, a camera), a voice sensor (e.g., a microphone), an environmental sensor (e.g., a hygrometer, a thermometer, a radioactivity detection sensor, a thermal sensor, and a gas sensor, etc.), and a chemical sensor (for example, a healthcare sensor, a biometric sensor, and the like).

The processor 160 may control all or some of the components included in the electronic device 100. For example, the processor 160 may control the rotation speed and/or rotation direction of the roller 120 through the drive unit 110 based on the value sensed by the sensor 150.

The processor 160 may be built into the electronic device 100. For example, the processor 160 may be built into the drive unit 110 or the sensor 150. Alternatively, the processor 160 may be externally mounted on the electronic device 100. In this case, the electronic device 100 receives a command from the processor 160 through a communication unit (not shown) included in the electronic device 100. For example, the processor 160 may be a controller, a central processing unit (CPU), or a microcontroller (MCU).

Hereinafter, a method of manufacturing the electrodes through the above-described components will be described in detail.

Meanwhile, for the convenience of description, the following description will be given as an example of a case where the roller 120 is a pair of rollers, including a first roller 121 and a second roller 122, but the scope or spirit of the embodiments are not limited thereto. For example, the electronic device according to embodiments may include two or more rollers arranged longitudinally and staggered relative to each other, wherein the rollers face each other and can provide shear force to the raw materials.

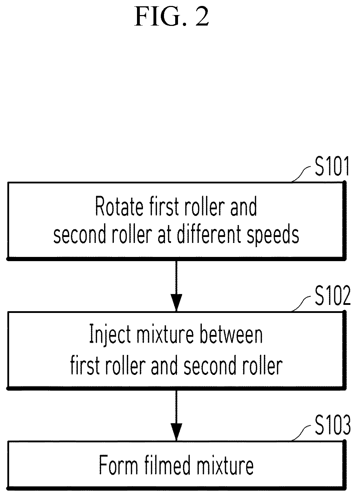

FIG. 2 is a flowchart illustrating a method for controlling the electronic device according to the embodiments of the present disclosure.

As shown in FIG. 2, a method for controlling the electronic device according to embodiments may include rotating (s101) the first roller 121 and the second roller 122 at different speeds.

The first roller 121 may rotate at a first speed. The second roller 122 may rotate at a second speed. At this time, the first speed and the second speed are the same or different from each other. For example, the first speed is higher than the second speed. The first roller 121 rotates in a first direction, and the second roller 122 rotates in a second direction. At this time, the first direction and the second direction are different from each other. For example, the first roller 121 rotates clockwise, and the second roller 122 rotates counterclockwise. Through this, the electronic device 100 according to the embodiments may apply shear force to the mixture 200 fed into the roller 120, and form a film of the mixture 200.

The electronic device control method according to the embodiments includes injecting (S102) a mixture 200 between the first roller 121 and the second roller 122. For example, the mixture 200 may be formed by mixing the conductive material 210, the active material 220, and the binder 230. At this time, the active material 220 may include a surface-modified active material 220. The mixture input unit 130 may inject the mixture 200 between the first roller 121 and the second roller 122. The mixture 200 is a mixture of at least one of the raw materials described in FIG. 1.

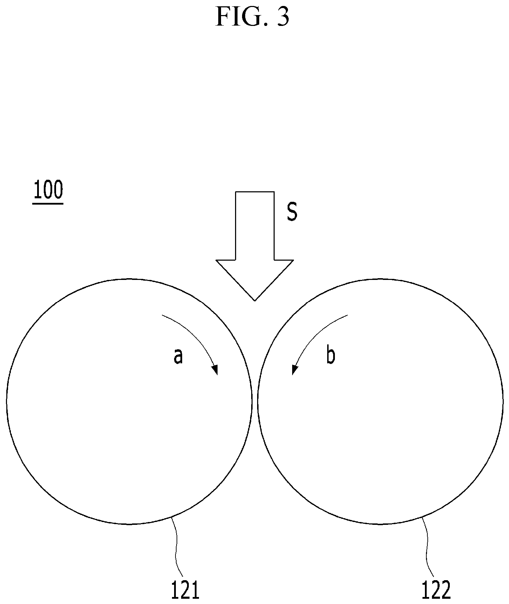

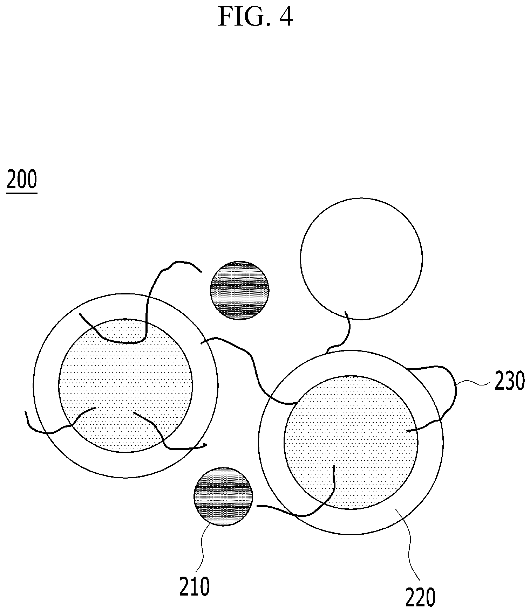

At this time, the order of S101 and S102 may be changed. For example, after the mixture 200 is injected between the first roller 121 and the second roller 122, the first roller 121 and the second roller 122 may rotate at different speeds. In addition, S101 and S102 may be performed simultaneously. S101 and S102 will be described in more detail with reference to FIGS. 3 and 4.

The electronic device control method according to the embodiments includes forming (S103) a filmed mixture. The first roller 121 and the second roller 122 may apply a force (e.g., shear force) to the mixture 200 introduced between the first roller 121 and the second roller 122. The first roller 121 and the second roller 122 cause the binder included in the mixture 200 to be fiberized.

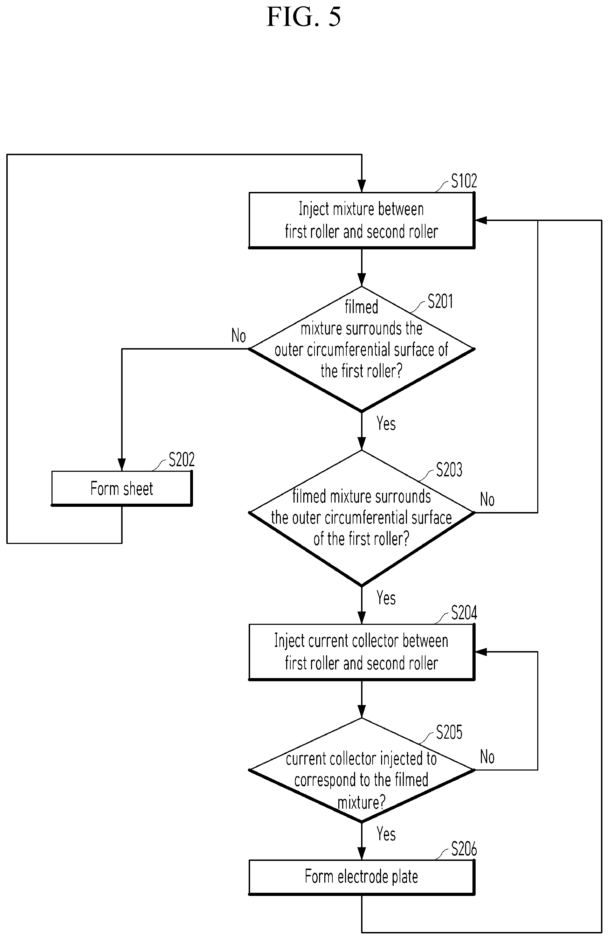

As a result, the electronic device 100 according to the embodiments can cause the introduced mixture 200 to be film-formed into a sheet shape having a predetermined thickness while passing through the first roller 121 and the second roller 122. Step S103 and subsequent steps after S103 will be described in more detail with reference to FIGS. 5 to 9 below.

FIG. 3 is a cross-sectional view illustrating the electronic device according to the embodiments of the present disclosure.

FIG. 4 is a schematic enlarged view illustrating a mixture introduced into the electronic device according to the embodiments of the present disclosure.

As shown in FIG. 3, the electronic device 100 according to the embodiments may include a first roller 121 and a second roller 122 that are arranged facing each other. The first roller 121 rotates in a first direction (a). The second roller 122 rotates in a second direction (b). For example, the first direction (a) and the second direction (b) are different from each other. The first roller 121 rotates at a first speed. The second roller 122 rotates at a second speed. For example, the first speed is higher than the second speed.

The mixture input unit 130 injects the mixture 200 in the direction (S). That is, the mixture input unit 130 may inject the mixture 200 between the first roller 121 and the second roller 122.

At this time, the mixture 200 is mixed with at least one of the raw materials described with reference to FIGS. 1 and 2. For example, as shown in FIG. 4, the mixture 200 may include at least one of a conductive material 210, an active material 220, and a binder 230.

For example, the conductive material 210 may increase the conductivity of the active material 220. For example, the active material 220 causes a reaction to occur by electrons and/or ions. For example, the binder 230 may bind the components included in the mixture 200 to each other, and may connect the conductive material 210 and the active material 220.

The active material 220 includes an active material 220 and a surface-modified active material 220. At this time, for example, the surface of the active material 220 with the modified surface is modified by a high-speed mixing device. For example, the surface of the active material 220 is coated with a polymer and/or a conductive material, so that the surface of the active material 220 is modified. For example, the surface of the active material 220 may be coated with a polymer and/or a conductive material such as polyvinylidene fluoride (PVDF), polytetrafluoroethylene (PTFE), polyethylene (PE), or styrenebutadiene rubber (SBR), so that the surface of the active material 220 is modified. The active material 220 may have a higher affinity with the binder 230 through such surface modification. The surface-modified active material 220 further enhances the shear force applied to the mixture 200 from the first roller 121 and/or the second roller 122. Accordingly, fiberization of the binder 230 is maximized. In addition, the mechanical properties and electrical performance of the electrodes formed by the present embodiments are improved.

For example, the binder 230 may be a fluororesin-based polymer (e.g., including PTFE, PVDF, ETFE, etc.), a sulfide-based polymer, polyethylene, or a rubber resin, but the scope of the binder 230 is not limited thereto. The binder 230 may include all materials having a property of causing fiberization by shear force.

Meanwhile, the binder 230 has a length of, for example, 20 µm to 100 µm. Through this, the binder 230 further helps the filmed mixture 201 to maintain the sheet shape.

The mixture 200 may be formed by mixing the conductive material 210, the active material 220, and the binder 230 by a high-speed mixing device. At this time, the high-speed mixing device is a device that mixes raw materials fed into the high-speed mixing device at high speed. The high-speed mixing device may include one or more blades for mixing the raw materials. One or more blades may pulverize or microfiberize the binder 230. Through this, other electronic devices 100 or electronic device control methods according to the embodiments do not require a process for activating a separate binder 230.

As described above, the mixture input unit 130 injects the mixture 200 in the S direction between the first roller 121 and the second roller 122. The first roller 121 and/or the second roller 122 may apply shear force to the injected mixture 200 through a rolling process.

At this time, the temperature of the first roller 121 or the second roller 122 is, for example, 25°C to 200°C. The electronic device 100 sets and/or drives the temperature of the first roller 121 or the second roller 122 to be in the range of 25°C to 200°C. Through this, the electronic device 100 according to the embodiments provides an easy working environment. Preferably, the temperature of the first roller 121 or the second roller 122 is, for example, 150°C to 200°C. Preferably, the electronic device 200 sets and/or drives the temperature of the first roller 121 or the second roller 122 to be in the range of 150°C to 200°C. Accordingly, the electronic device 200 according to the embodiments can provide the environment in which the affinity between the binder 230 and the active material 220 or the surface-modified active material 220 is further increased. In addition, the electronic device 100 according to the embodiments may maximize fiberization of the binder 230 through this environment.

Hereinafter, steps to be performed after the mixture 200 is injected into the first roller 121 and the second roller 122 will be described in detail.

FIG. 5 is a flowchart illustrating a method for controlling the electronic device according to the embodiments of the present disclosure.

The electronic device control method according to the embodiments includes injecting (S102) the mixture 200 between the first roller 121 and the second roller 122. The description of S102 of FIG. 5 is the same as or similar to the description of S102 described in FIG. 2. In the same manner as in FIG. 2, an example case in which the first roller 121 rotates at a higher speed than the second roller 122 will be described as an example.

The electronic device control method according to the embodiments includes determining (S201) whether the filmed mixture 201 surrounds the outer circumferential surface of the first roller 121. The electronic device 100 may determine whether the filmed mixture 201 surrounds the outer circumferential surface of the first roller 121 through a sensor 150.

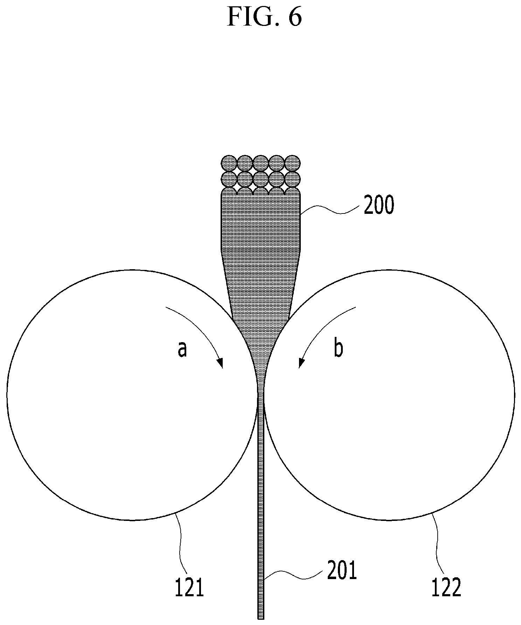

The electronic device control method according to the embodiments includes forming (S202) a sheet if the filmed mixture 201 does not surround the outer circumferential surface of the first roller 121. In this case, the electronic device 100 may form a freestanding sheet. Step (S202) will be described later in more detail with reference to FIG. 6.

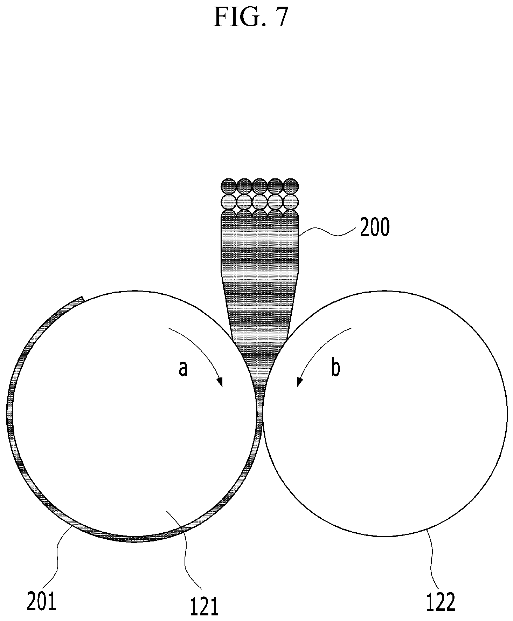

The electronic device control method according to the embodiments includes determining (S203) whether the filmed mixture 201 surrounds the outer circumferential surface of the first roller 121 by a preset range or greater when the filmed mixture 201 surrounds the outer circumferential surface of the first roller 221. The processor 160 determines whether the filmed mixture 201 surrounds the outer circumferential surface of the first roller 221 by a preset range or greater through the sensor 150. Step S203 will be described later with reference to FIG. 7.

If the processor 160 does not determine that the filmed mixture 201 has surrounded the outer circumferential surface of the first roller 221 by a preset range or greater, the processor 160 continues to perform step (S102). That is, the processor 160 may control the mixture input unit 130 to continuously inject the mixture 200 between the first roller 121 and the second roller 122.

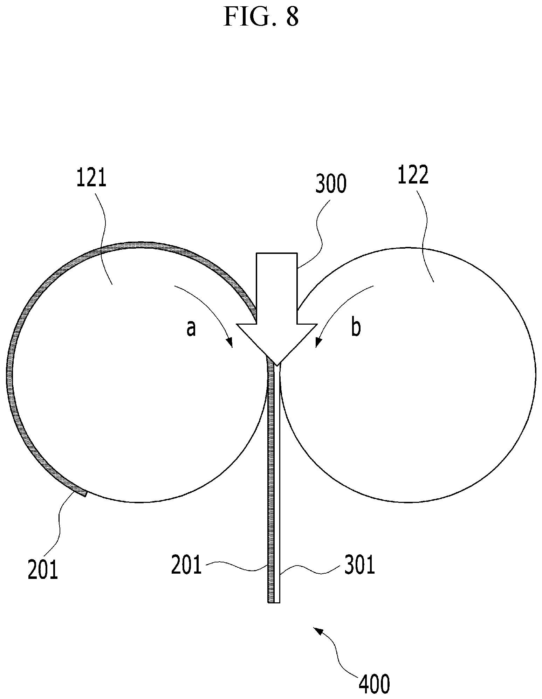

The electronic device control method according to the embodiments may include injecting (S204) a current collector 300 between the first roller 121 and the second roller 122 when it is determined that the filmed mixture 201 has surrounded the outer circumferential surface of the first roller 221 by a preset range or greater. Step S204 will be described later with reference to FIG. 8.

The electronic device control method according to the embodiments may include determining (S205) whether the current collector 300 has been injected to correspond to the filmed mixture 201. Step (S205) will be described later with reference to FIG. 8.

If the processor 160 determines that the current collector 300 has not been injected to correspond to the filmed mixture 201, the processor 160 continues to perform step S204. That is, the processor 160 controls the current collector input unit 140 to continuously inject the current collector 300 between the first roller 121 and the second roller 122.

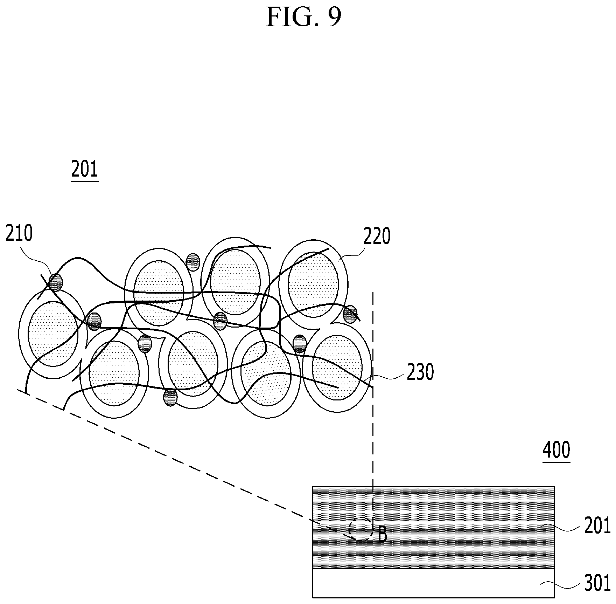

The electronic device control method according to the embodiments includes forming (S206) an electrode plate if it is determined that the current collector 300 is input to correspond to the filmed mixture. Step (S206) will be described later with reference to FIG. 9.

In this way, the embodiments may fabricate the electrode sheet having a target thickness while feeding raw materials. Through this, the embodiments may fabricate the electrode sheet having a uniform electrode surface. In addition, the embodiments can simplify the process.

FIG. 6 is a cross-sectional view illustrating a process in which a mixture is filmed by the electronic device according to the embodiments of the present disclosure.

As described in FIG. 3, the first roller 121 rotates at a first speed, and the second roller 122 rotates at a second speed. At this time, the ratio of the first speed to the second speed may be 6: 1 to 20:1. That is, the first roller 121 can rotate at a higher speed than the second roller 122.

Through the speed difference between the first roller 121 and the second roller 122, the electronic device 100 may apply shear force to the mixture 200. For example, the first roller 121 and the second roller 122 may apply the shear force to the mixture 200 to cause the binder 230 to be fiberized. The binder 230 may connect at least a portion of the plurality of conductive materials 210 and the plurality of active materials 220 while being fiberized. Meanwhile, as described in FIG. 4, when the mixture 200 includes the surface-modified active material 220, the uniformity of fiberization is maximized. In addition, through this, the electronic device 100 may control friction between the raw materials and control porosity. At this time, the porosity is a ratio of the empty spaces between the plurality of active materials 220.

The first roller 121 and the second roller 122 may film the mixture 200 passing between the first roller 121 and the second roller 122 to form a sheet shape. At this time, the filmed mixture 201 has a thickness that is the same as or similar to the shortest distance between the outer circumferential surface of the first roller 121 and the outer circumferential surface of the second roller 122.

The first roller 121 and the second roller 122, as shown in FIG. 6, have a large difference in speed so that the filmed mixture 201 may be output as is without being attached to the first roller 121 and/or the second roller 122. Through this, the first roller 121 and the second roller 122 may output the filmed mixture 201 in a freestanding form. At this time, the filmed mixture 201 maintains a sheet form by maintaining the binding between the raw materials by the fiberized binder 230.

In this way, the electronic device 100 according to the embodiments increases the degree of fiberization of the binder 230 by providing a large speed difference between the two rollers for the mixture 200. Through this, the electronic device 100 according to the embodiments allows the sheet shape to be maintained well by the increased fiberization. The electronic device 100 according to the embodiments can manufacture a freestanding dry electrode through a single rolling process.

In addition, the electronic device 100 according to the embodiments may reduce manufacturing time and costs and prevent environmental pollution by omitting a separate solvent drying process. The electronic device 100 according to the embodiments may more efficiently mass produce sheets. In addition, the electronic device 100 according to the embodiments may form a high-loading electrode, thereby producing a battery with maximized capacity.

FIG. 7 is a cross-sectional view schematically illustrating a process in which a mixture is filmed by the electronic device according to the embodiments of the present disclosure.

FIG. 7 illustrates an example in which the first roller 121 and the second roller 122 are driven at different speed ratios from those of FIG. 6. As shown in FIG. 3, the first roller 121 rotates at a first speed, and the second roller 122 rotates at a second speed. At this time, the ratio of the first speed to the second speed may be 1: 1 to 10:1. The first roller 121 may rotate at a higher speed than the second roller 122.

Through the speed difference between the first roller 121 and the second roller 122, the electronic device 100 may apply shear force to the mixture 200. For example, the first roller 121 and the second roller 122 may apply shear force to the mixture 200 to cause the binder 230 to be fiberized. As the binder 230 is fiberized, the binder 230 connects at least a portion of the plurality of conductive materials 210 to the plurality of active materials 220. Meanwhile, as described in FIG. 4, when the mixture 200 includes the surface-modified active material 220, uniformity of fiberization is maximized.

The first roller 121 and the second roller 122 may film the mixture 200 passing between the first roller 121 and the second roller 122 to form a sheet shape. At this time, the filmed mixture 201 has a thickness that is the same as or similar to the shortest distance between the outer circumferential surface of the first roller 121 and the outer circumferential surface of the second roller 122.

As shown in FIG. 7, the first roller 121 and the second roller 122 have a difference in speed from each other so that the filmed mixture 201 is output in a state of being wound around the first roller 121 and/or the second roller 122. The first roller 121 and the second roller 122 may output the filmed mixture 201 in the form of a sheet wound around the rollers. That is, as shown in FIG. 7, the filmed mixture 201 is wound around the first roller 121 having a relatively higher speed, and is then output. At this time, the filmed mixture 201 maintains the sheet shape by maintaining the binding between the raw materials by the fiberized binder 230.

In this way, the electronic device 100 according to the embodiments increases the degree of fiberization of the binder 230 by providing a speed difference between the two rollers for the mixture 200. Through this, the electronic device 100 according to the embodiments allows the sheet shape to be maintained well by the increased fiberization.

Meanwhile, the sensor 150 shown in FIG. 1 may sense the amount of the mixture injected toward the roller 120. For example, the sensor 150 may sense the degree to which the filmed mixture 201 surrounds the outer circumferential surface of the first roller 121.

The processor 160 determines whether the filmed mixture 201 surrounds the outer circumferential surface of the first roller 121 by a preset range or greater through the sensor 150. If the processor 160 determines that the filmed mixture 201 does not surround the outer circumferential surface of the first roller 121 by a preset range or greater, the processor 160 continues to inject the mixture 200 between the first roller 121 and the second roller 122 through the mixture input unit 130. When the processor 160 determines that the filmed mixture 201 has surrounded the outer circumferential surface of the first roller 121 by a preset range or greater, the processor stops the mixture 200 from being fed between the first roller 121 and the second roller 122 through the mixture input unit 130. At this time, the preset range may be, for example, a distance of 0° to 360° with respect to the outer circumferential surface of the first roller. For example, when a short electrode is required, the preset range may have a small value, for example, 90°. Alternatively, when a long electrode is required, the preset range may have a large value, for example, 360°.

If it is determined that the filmed mixture 201 has surrounded the outer circumferential surface of the first roller 121 by a preset range or greater, the processor 160 causes the current collector input unit 140 instead of the mixture input unit 130 to come closer to the direction between the first roller 121 and the second roller 122. However, if the mixture input unit 130 and the current collector input unit 140 are formed in one module, the processor 160 does not need to control the positions of the mixture input unit 130 and the current collector input unit 140. An example case where the current collector input unit 140 faces the space between the first roller 121 and the second roller 122 will be described in detail with reference to FIG. 8.

FIG. 8 is a cross-sectional view schematically illustrating a process of forming electrode plates by the electronic device according to the embodiments of the present disclosure.

When the filmed mixture 201 surrounds the outer circumferential surface of the first roller 121 by a preset range or greater, the current collector input unit 140 inserts the current collector 300 into the space between the first roller 121 and the second roller 122.

The current collector 300 may transfer electrons from the outside so that an electrochemical reaction occurs in the active material 220. Alternatively, the current collector 300 receives electrons from the active material, and sends the electrons to the outside. The current collector 300 may be, for example, a current collector coated with a primer.

When the current collector 300 is inserted, the drive unit 110 allows the first roller 121 to be driven at the first speed and/or the second roller 122 to be driven at the second speed. For example, the drive unit 110 causes the ratio of the first speed to the second speed to be 1:1 to 5:1. Preferably, the drive unit 110 causes the ratio of the first speed to the second speed to be 1: 1 to 2:1. The first roller 121 may rotate at a higher speed than the second roller 122.

Through this, the electronic device 100 according to the embodiments causes the current collector 301 to be attached to the filmed mixture 201. In addition, the electronic device 100 according to the embodiments may increase the adhesion between the filmed mixture 201 and the current collector 301 through the rolling process, and may maximize fiberization of the binder 230.

Meanwhile, the sensor 150 shown in FIG. 1 may sense the amount of the current collector 300 injected toward the roller 120. The current collector input unit 140 injects a predetermined amount of the current collector 300 corresponding to the length of the filmed mixture 201 shown in FIG. 7. Therefore, for example, as described in FIG. 8, when the current collector 300 is attached to one surfaced of the filmed mixture 201, the longitudinal length of the filmed mixture 201 and the longitudinal length of the attached current collector 301 are the same or similar to each other.

The electronic device 100 according to embodiments may create the electrode plate 400 by attaching the current collector 300 to the mixture 200 through the first roller 121 and the second roller 122.

The electrode plate 400 includes a filmed mixture 201 and a current collector 301 attached to one surface of the filmed mixture 201. At this time, the electronic device 100 may perform a rolling process once in a process of filming the mixture 200, and may perform a rolling process once in a process of attaching the current collector 301 to the filmed mixture 201, so that the electronic device 100 may perform a total of two rolling processes on the mixture 200.

Through one or more rolling processes, the electronic device 100 may manufacture a sheet with a low porosity. At this time, the porosity is a measure of the empty space between the plurality of active materials 220. As the porosity decreases, energy density of the electrodes can be improved.

The electronic device 100 may manufacture a sheet with improved energy density by controlling the porosity as described above.

In this way, the electronic device 100 according to the embodiments can film the raw materials through a single device and also laminate the current collector 300 on the filmed raw materials. In addition, the electronic device 100 according to the embodiments may input the mixture 200 into the roller 120 without fiberization of a separate binder 230, and may simultaneously manufacture a plate having an electrode attached onto the current collector 300 through one rolling. Through this, the electronic device 100 according to the embodiments can simplify the fabrication process and reduce the production costs.

In addition, the electronic device 100 according to embodiments may eliminate a separate solvent drying process, thereby reducing manufacturing time and costs and preventing environmental pollution. The electronic device 100 according to the embodiments can thus mass-produce sheets more efficiently. In addition, the electronic device 100 according to the embodiments can thus form a high-loading electrode, thereby producing a battery with maximized capacity.

The electrode (e.g., sheet, filmed mixture) or the electrode plate including the electrode manufactured through FIGS. 1 to 8 will be described with reference to FIG. 9.

FIG. 9 is a cross-sectional view schematically illustrating electrode plates formed by the electronic device according to the embodiments of the present disclosure.

The electrode plate 400 manufactured according to the embodiments may be formed by stacking the filmed mixture 201 and the current collector 301. Reference numeral 201 is an enlarged view of the portion (B) of the electrode plate 400, showing the filmed mixture 201. Reference numeral 201 may include description of the freestanding electrode manufactured by the process of FIG. 6. Therefore, reference numeral 201 may include both the state of the raw materials included in the freestanding electrode and the state of the raw materials included in the electrode plate.

As illustrated in FIG. 9, the binder 230 is fiberized by receiving shear force by the first roller 121 and/or the second roller 122. For example, it can be seen that the binder 230 illustrated in FIG. 9 is more entangled with the active material 220 and the conductive material 210 than the binder 230 illustrated in FIG. 4. In this way, the fiberized binder 230 is entangled with at least a portion of the conductive material 210 and the active material 220, and acts as a mattress inside the electrode. In addition, the fiberized binder 230 may allow the output sheet shape to be maintained while passing between the first roller 121 and the second roller 122.

In this way, the electronic device 100 according to the embodiments may produce a sheet without a separate solvent by applying shear force to the mixture 200 through a rolling process. For example, the electronic device 100 maximizes the shear force by controlling the first roller 121 and the second roller 122 at different speed ratios so that the binder 230 is appropriately fiberized. In addition, through this, the electronic device 100 provides an electrode having a certain level of strength that can be mass-produced.

The detailed description of the electronic device and the method for controlling the same according to the embodiments of the present disclosure has been given to enable those skilled in the art to implement and practice the invention. Although the electronic device and the method for controlling the same according to the embodiments have been described with reference to the preferred examples, those skilled in the art will appreciate that various modifications and variations can be made in the present disclosure without departing from the spirit or scope of the present disclosure described in the appended claims. Accordingly, the present disclosure should not be limited to the specific examples described herein, but should be accorded the broadest scope consistent with the principles and novel features disclosed herein.

A person skilled in the art may practice unspecified embodiments by combining or substituting the disclosed embodiments, without departing from the scope of the present disclosure. It will be apparent to those skilled in the art that various modifications and variations can be made in the present disclosure without departing from the spirit or scope of the invention. Thus, it is intended that the present disclosure cover the modifications and variations of this invention provided they come within the scope of the appended claims and their equivalents.

### [Industrial Applicability]

The electronic device and the method for controlling the same according to the embodiments of disclosure have industrial applicability.

## Claims

1. An electronic device (100) comprising:
a first roller (121),
a second roller (122) arranged to face the first roller (121); and
a drive unit (110) that rotates the first roller (121) at a first speed and rotates the second roller (122) at a second speed different from the first speed so that a mixture (200) fed between the first roller (121) and the second roller (122) is formed into a film.

2. The electronic device (100) according to claim 1, wherein:
the drive unit (110) drives the first roller (121) and the second roller (122) so that a ratio of the first speed to the second speed is 6:1 to 20:1.

3. The electronic device (100) according to claim 1, wherein:
the drive unit (110) drives the first roller (121) and the second roller (122) so that a ratio of the first speed to the second speed is 1:1 to 10:1.

4. The electronic device (100) according to claim 3, further comprising:
a mixture input unit (130) configured to feed the mixture (200); and
a current collector input unit (140) configured to feed a current collector (300) after the mixture (200) has been input.

5. The electronic device (100) according to claim 4, further comprising:
a sensor (150) configured to sense a degree to which the filmed mixture (201) surrounds an outer circumferential surface of the first roller (121).

6. The electronic device (100) according to claim 5, wherein:
when the sensor (150) senses that the filmed mixture (201) surrounds the outer circumferential surface of the first roller (121) by a preset range or greater, the current collector input unit (140) injects the current collector (300).

7. The electronic device (100) according to claim 4, wherein:
after the current collector (300) is input, the drive unit (110) drives the first roller (121) and the second roller (122) so that the ratio of the first speed to the second speed is 1: 1 to 5:1.

8. The electronic device (100) according to claim 1, wherein:
the first roller (121) and the second roller (122) are configured to rotate in opposite directions.

9. The electronic device (100) according to claim 1, wherein:
the first roller (121) and the second roller (122) are driven at a temperature of 25°C to 200°C.

10. The electronic device (100) according to claim 9, further comprising:
the first roller (121) and the second roller (122) are driven at a temperature of 150°C to 200°C.

11. A method for controlling an electronic device comprising:
rotating a first roller (121) at a first speed, and rotating a second roller (122) arranged to face the first roller (121) at a second speed different from the first speed;
allowing a mixture (200) to be injected between the first roller (121) and the second roller (122); and
forming a film of the injected mixture (200) using the first roller (121) and the second roller (122).

12. The method according to claim 11, further comprising:
driving the first roller (121) and the second roller (122) so that a ratio of the first speed to the second speed becomes 6:1 to 20:1 when the mixture (200) is injected.

13. The method according to claim 11, further comprising:
driving, by a drive unit (110), the first roller (121) and the second roller (122) so that a ratio of the first speed to the second speed becomes 1: 1 to 10:1 when the mixture (200) is injected.

14. The method according to claim 13, further comprising:
injecting, by the drive unit (110), a current collector (300) when the filmed mixture (201) surrounds an outer circumferential surface of the first roller (121) by a preset range or greater; and
forming an electrode plate (400) in which the current collector (300) is attached onto the filmed mixture (201).

15. The method according to claim 14, wherein the injecting the current collector (300) includes:
driving, by the drive unit (110), the first roller (121) and the second roller (122) so that a ratio of the first speed to the second speed is 1:1 to 5:1.

16. The method according to claim 11, wherein the injecting the mixture (200) includes:
forming a surface-modified active material (220) coated with at least one of a polymer and a conductive material;
forming a mixture (200) by mixing a conductive material (210), an active material (220), the surface-modified active material (220), and a binder(230); and
injecting the mixture (200).
